# EUROPÄISCHE PATENTSCHRIFT

(11) **EP 2 602 890 B1**
(45) Veröffentlichungstag und Bekanntmachung des Hinweises auf die Patenterteilung: **17.01.2018**
(21) Anmeldenummer: 12194539.8
(22) Anmeldetag: 28.11.2012
(51) Int. Cl.: H02G 11/02, B66C 13/12, E02F 3/26

(54) **ANORDNUNG EINES ENERGIEZUFÜHRUNGSKABELS ZWISCHEN EINEM FESTSTEHENDEN UNTERBAU UND EINEM DARAUF DREHBAREN OBERBAU EINES TAGEBAUGERÄTES**
ARRANGEMENT OF AN ENERGY SUPPLY CABLE BETWEEN A FIXED SUBSTRUCTURE AND A ROTATABLE SUPERSTRUCTURE OF AN OPEN-CAST MINING DEVICE
AGENCEMENT D'UN CÂBLE D'ALIMENTATION EN ÉNERGIE ENTRE UN BÂTI FIXE ET UNE PARTIE SUPÉRIEUR TOURNANT DESSUS D'UN APPAREIL D'EXPLOITATION À CIEL OUVERT

(30) Priorität: 09.12.2011 DE 102011120698
(43) Veröffentlichungstag der Anmeldung: 12.06.2013
(73) Patentinhaber: Takraf GmbH, 04347 Leipzig (DE)
(72) Erfinder: Petack, Burkhard, 01968 Senftenberg (DE)
(74) Vertreter: Kailuweit & Uhlemann Patentanwälte Partnerschaft mbB

(56) Entgegenhaltungen:
- DD-B5- 287 360
- DE-U1- 8 628 258
- DE-U1- 9 307 743
- DE-U1- 9 417 358
- SU-A1- 1 023 489

## Beschreibung

Die Erfindung betrifft die Anordnung eines Energiezuführungskabels zwischen einem feststehenden Unterbau und einem drehbaren Oberbau eines Tagebaugerätes gemäß dem Oberbegriff des Hauptanspruchs mit einem möglichen Drehwinkel des Oberbaus gegenüber dem Unterbau von 360°. Dabei kann die Drehbewegung des Oberbaus maximal eine komplette Umdrehung betragen, wobei danach eine weitere Drehbewegung, wie groß auch immer, entgegengesetzt dazu erfolgen muss. Dies erfolgt auf Grund der für den Einsatzort des Tagebaugerätes vorgesehenen Technologie. Neben der Anwendung bei Tagebaugeräten ist sie auch bei Lagerplatzgeräten wie beispielsweise Lageplatzbeschickungs- und Lagerplatzrückgewinnungsgeräten geeignet.

Aus der Druckschrift SU 1 023 489 A ist eine Lösung für das freie Verlegen von Energiezuführungskabeln zwischen dem Unterbau und dem darauf drehbar angeordneten Oberbau einen Tagebaugerätes bekannt, bei dem die Kabel zusätzlich an einem drehbaren Ring aufgehängt sind, wobei sie zwei Schlaufen bilden, die innerhalb des Unterbaus herunterhängen. Dieser drehbare Ring ist mit dem Oberbau derart kinematisch verbunden, dass sich der drehbare Ring mit den an ihm befestigten Strängen der Kabelschlaufen um einen Schwenkwinkel bewegt, der zweimal geringer ist, als der Winkel, um den gleichzeitig
der drehbare Teil mit den an ihm befestigten Strängen der Kabelschlaufen schwenkt. Der gleiche Effekt wird bei Austausch des Ringes durch einen drehbaren Kabelsattel erzielt. Das Energiezuführungskabel wird am oberen Bereich des feststehenden Unterbaues über einem fest verlagerten Kabelsattel in den Unterbau eingeführt und mittels einer freihängenden Kabelschlaufe mit möglichst großem Radius auf dem in Mitte Oberbau drehbar verlagerten Kabelsattel geführt und befestigt. Eine weitere frei hängende Kabelschlaufe, welche weit in den Unterbau eintaucht, um eine möglichst große Verdrilllänge zu bekommen, wird dann auf dem im oberen Bereich des drehbaren Oberbaues wiederum fest verlagerten Kabelsattel befestigt. Mit der

Ausführung als drehbarer Ring bzw. Kabelsattel wird das Energiezuführungskabel beim Schwenken des Oberbaues Zugbelastungen ausgesetzt, was zum frühen Verschleiß führt.
Weiterhin ist aus der Druckschrift DD 287 360 B5 eine Kabelführung zwischen einem feststehenden Unterbau und einem drehbaren Oberbau eines Tagebaugerätes bekannt, bei der das Energiezuführungskabel vom Unterbau durch einen fest verlagerten Kabelsattel in einer ersten Schlaufe über einen in der Drehachse des Oberbaus angeordneten drehbaren Kabelsattel in einer zweiten Schlaufe durch einen weiteren fest verlagerten Kabelsattel in den drehbaren Oberbau geführt wird. Zur Aufnahme der entstehenden Zugbelastung wird das Energiezuführungskabel an ein dazu etwa parallel freihängendes und etwas kürzeres Zugseil aufgehängt. Dieser konstruktive Aufbau bewirkt, dass sich der drehbare Kabelsattel bei einer Verdrehung des Oberbaus zum Unterbau um einen bestimmten Winkel der Kabelsattel etwa um die Hälfte dieses Winkels verdreht, so dass sich das Verdrillen des Energiezuführungskabels auf beide Kabelschlaufen etwa anteilmäßig verteilt. Mit der Ausführung nach der im Patent wieder gegebenen Zeichnung kann mit dem so verlegten Energiezuführungskabel ein Drehwinkel des Oberbaus von etwa 220° erreicht werden. Diese Lösung ist für solche Einsatzfälle nicht geeignet, bei denen sich in der Drehachse des Oberbaus eine Drehsäule befindet.

Der Erfindung liegt die Aufgabe zugrunde, die Kabelführung zwischen einem feststehenden Unterbau und einem drehbaren Oberbau eines Tagebaugerätes so auszubilden, dass der Oberbau auch bei dem Vorhandensein einer Drehsäule für den Oberbau um einen Winkel von bis zu 360° schonend gedreht werden kann. Diese Aufgabe wird mit den Merkmalen des Anspruchs gelöst, indem das Energiezuführungskabel jeweils an einer Seite der Drehsäule vorbei geführt wird. Dazu wird neben einem ersten Kabelsattel am Unterbau und einem zweiten Kabelsattel am Oberbau etwa in der halben Höhe ein dritter Kabelsattel angeordnet. Dieser dritte Kabelsattel ist um zwei zueinander parallele Achsen drehbar. Dazu ist ein Arm vorgesehen, der die Drehsäule mit dem Kabelsattel verbindet. Dieser Arm ist auf der einen Seite in einem Lager drehbar mit der Drehsäule verbunden und nimmt mit seinem anderen Ende in einem zweiten Lager den Kabelsattel drehbar auf.

Zwischen zwei benachbarten Kabelsätteln wird das Energiezuführungskabel in Schlaufen geführt. Wenn sich der Oberbau gegenüber dem Unterbau jeweils in eine Drehrichtung bewegt, wird das Energiezuführungskabel durch das selbsttätige Mitdrehen des dritten Kabelsattels gestützt und in schonender Weise an der Drehsäule vorbei geführt. Durch dieses mögliche Drehen des Oberbaus gegenüber dem Unterbau um 360° kann das mit dieser Kabelführung ausgerüstete Gerät für Drehbewegungen in diesen Bereichen eingesetzt werden.

Durch die Möglichkeit des selbsttätigen Drehens um seine senkrechte Achse kann der zweite Kabelsattel zwischen der Schlaufe des Energiezuführungskabels und der Weiterführung in den Oberbau eine Ausgleichsbewegung ausführen. Durch diese konstruktive Ausbildung und die Ausstattung der Kabelsättel mit großen Seilführungsradien wird eine schonende Führung der Energiezuführungskabel erreicht.

Durch die Lösung ist der Zustand von zwei Kabelschlaufen in ihrer Funktion als Kabelspeicher gegeben, die in ihrer gestreckten Länge die Drehbewegung von 360° zwischen Oberbau und Unterbau durch das Aufziehen der Kabelschlaufen ermöglichen.

Im Folgenden wird die Erfindung anhand eines bevorzugten Ausführungsbeispieles und mit Bezug auf die Zeichnungen näher erläutert, Es zeigen
**Fig. 1** eine teilweise Seitenansicht des Bereiches der Kabelführung zwischen dem Unterbau und dem Oberbau eines Tagebaugerätes im Schnitt,
**Fig. 2** die Kabelführung zwischen dem Unterbau und dem Oberbau in einer perspektivischen Darstellung und
**Fig. 3a bis 3c** die Kabelführung in drei verschiedenen Stellungen des Oberbaus in perspektivischen Darstellungen.

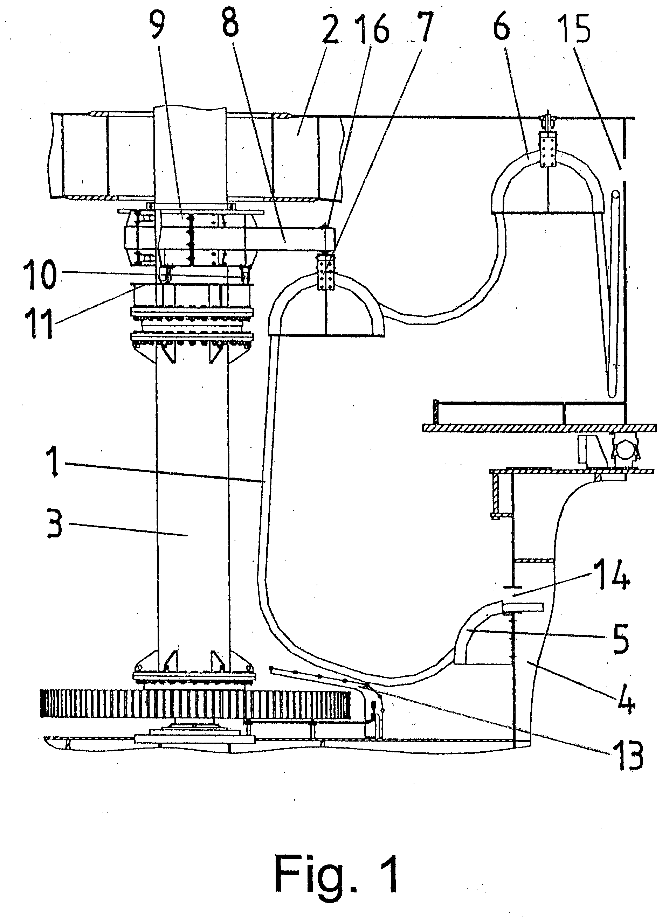

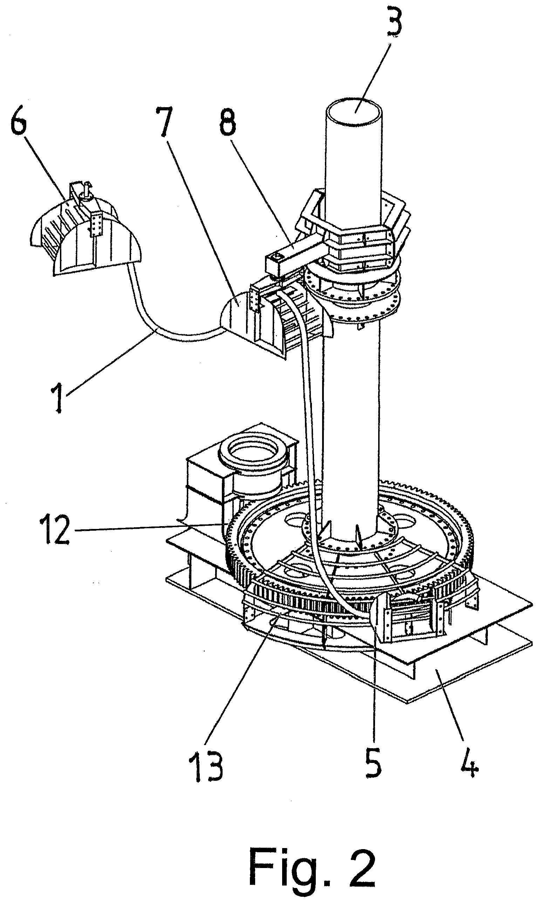

Nach den **Fig. 1** und **2** wird das Energiezuführungskabel 1 in einer für die Drehbewegung des Oberbaus 2 eines Schaufelradbaggers ausreichend bemessenen Länge in der Drehmitte des Oberbaus 2 an der Drehsäule 3 vorbei vom Unterbau 4 zum Oberbau 2 geführt. Dazu ist am Kabelausgang 14 des Unterbaus 4 ein fest gelagerter halber erster Kabelsattel 5 und am Kabeleingang 15 des drehbaren Oberbaus 2 ein um eine senkrechte Achse drehbarer zweiter Kabelsattel 6 angeordnet. Von diesem drehbaren zweiten Kabelsattel 6 wird das Energiezuführungskabel 1 zum Oberbau 2 geführt und von diesem aufgenommen. Dazwischen ist ein weiterer, um zwei senkrechte Achsen drehbarer dritter Kabelsattel 7 angeordnet. Die erste Schwenkachse des dritten Kabelsattels 7 ist die Drehsäule 3 und die zweite Drehachse ein Lagerbolzen 16. Um die Längsachse der Drehsäule 3 ist ein Arm 8 schwenkbar angeordnet. Dazu wird der Arm 8 von einer die Drehsäule 3 umschließenden Lagerschale 9 aufgenommen. Die Lagerschale 9 und die Drehsäule 3 bilden miteinander ein Gleitlager. Zur Fixierung der so ausgebildeten Aufnahme dieses dritten Kabelsattels 7 in seiner Höhe wird die Lagerschale 9 unten mit Rollen 10 versehen, die sich auf einer an der Drehsäule 3 befestigten Ringscheibe 11 mit einer waagerechten Rollfläche bewegen können. Am freien Ende dieses drehbar angeordneten Armes 8 ist er mit einer senkrechten Lagerbohrung versehen, in der der dritte Kabelsattel 7 mit einem Lagerbolzen 16 drehbar angeordnet ist.

Das Energiezuführungskabel 1 wird so über die drei Kabelsättel 5, 7, 6 geführt, dass die Kabellängen auf beiden Seiten etwa gleich sind. Dabei entsteht zwischen dem Unterbau 4 und dem dritten Kabelsattel 7 eine s-förmige Kabelführung und zwischen dem dritten Kabelsattel 7 und dem Oberbau 2 eine Schlaufe. Beim Verdrehen des Oberbaus 2 stellt sich der dritte bewegliche Kabelsattel 7 immer von selbst in die Mittelstellung zwischen Unter- und Oberbau 4, 2, so dass für beide Kabelhälften gleiche Verdrilllängen entstehen. Damit das Energiezuführungskabel 1 mit seiner unteren Schlaufe nicht durch die bewegten Teile des Drehwerksantriebes 12 beschädigt werden kann, ist über dem Zahnkranz ein Schutzgitter 13 angeordnet.

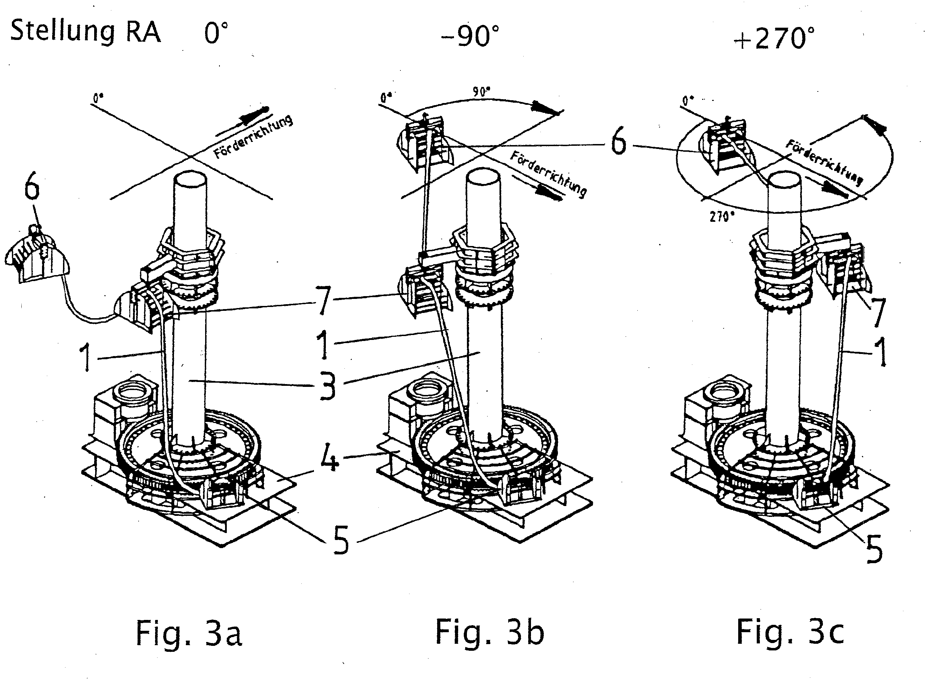

In Fig. 3 sind mit den Buchstaben a bis c drei verschiedene Stellungen des Oberbaus 2 zum Unterbau 4 mit den Führungen des Energiezuführungskabels 1 über die drei Kabelsättel 5, 6 und 7 dargestellt. Eine weitere Stellung zeigt Fig. 1. Diese Stellungen sind mögliche Stellungen, die sich aus der für einen Schaufelradbagger an Hand einer konkreten Abbautechnologie im Tagebau und den damit erforderlichen Schwenkwinkeln des Oberbaus mit dem Radausleger ergeben können. Da die Stellung des Kabelausgangs 14 Unterbau 4 zum Kabeleingang 15 Oberbau 2 nicht mit der Lage der Aufbauten des Oberbaus 2, wie z. B. dem Radausleger (in der Zeichnung mit RA bezeichnet) eines Schaufelradbaggers, identisch sein müssen, wird in den Zeichnungen nach Fig. 2 und Fig. 3a die Ausgangsstellung des Radauslegers RA mit 0° zum Unterbau 4 angenommen. Die Förderrichtung des Auslegerbandes und damit die Stellung des Radauslegers des Schaufelradbaggers wird in allen drei Zeichnungen nach Fig. 3 mit einem geradlinigen Richtungspfeil gekennzeichnet. Weiterhin wird angenommen, dass der Unterbau 4 auf den Zeichnungen immer die gleiche Stellung einnimmt. Das Energiezuführungskabel 1 wird, wie in der Zeichnung nach Fig. 3a in der 0°-Stellung des Radauslegers RA wieder gegeben, in großen Krümmungsradien und damit in schonender Weise vom Unterbau 4 zum Oberbau 2 geführt.

Fig. 3b zeigt eine Stellung des Oberbaus 2 mit dem Radausleger RA in einem Winkel von -90° zum Unterbau 4. Diese Drehung des Oberbaus 2 zum Unterbau 4 erfolgt aus der 0°-Stellung nach Fig. 3a in der Draufsicht im Urzeigersinn. Der Schwenkwinkel und die Schwenkrichtung sind mit einem Kreisbogen und einem Richtungspfeil dargestellt. Das Energiezuführungskabel 1 wird dann von unten in einer nach der Zeichnung erfolgten Biegung nach oben links über den mittleren Sattel 7 und von dort in einer weiteren Biegung nach links zum oberen Sattel 6 geführt. Durch die Möglichkeit des selbsttätigen Schwenkens um seine senkrechte Achse kann der obere Kabelsattel 6 zwischen der Schlaufe des Energiezuführungskabels 1 und der Weiterführung in den Oberbau eine Ausgleichsbewegung ausführen.

Die Kabelführung nach Fig. 1 entspricht einer Stellung des Radauslegers mit +90° zum Unterbau 4. Zur Einnahme dieser Stellung wird der Oberbau 2 mit dem Radausleger RA aus der 0°-Stellung nach Fig. 3a entgegen dem Uhrzeigersinn um 90° geschwenkt. Ein Schwenken um weitere +180° auf +270° zum Unterbau 4 wird in Fig. 3c gezeigt.

Mit der zweifachen schwenkbaren Anordnung des dritten Sattels 7 an der Drehsäule 3 wird ein Drehbereich des Oberbaus 2 zum Unterbau 4 eines Schaufelradbaggers oder anderen Tagebau- oder Lagerplatzgerätes bei der Anwendung einer bestimmten Reihenfolge und Richtung der Drehbewegung um insgesamt 360° ermöglicht. Dieser Drehwinkel von 360° setzt sich aus zwei entgegengesetzt gerichteten Drehbewegungen von +270° und -90° zusammen, wobei diese beiden Drehwinkel in jede Richtung im Bedarfsfall sogar überschritten werden können.

### Bezugszeichenliste

- 1: Energiezuführungskabel
- 2: Oberbau
- 3: Drehsäule
- 4: Unterbau
- 5: erster Kabelsattel Unterbau
- 6: zweiter Kabelsattel Oberbau
- 7: dritter Kabelsattel Drehsäule
- 8: Arm
- 9: Lagerschale
- 10: Rolle
- 11: Ringscheibe
- 12: Drehwerksantrieb
- 13: Schutzgitter
- 14: Kabelausgang Unterbau
- 15: Kabeleingang Oberbau
- 16: Lagerbolzen
- RA: Radausleger

## Patentansprüche

1. Tagebaugerät aufweisend einen feststehenden Unterbau (4) und einen darauf drehbar gelagerten Oberbau (2), mit einer zwischen dem Unterbau (4) und dem Oberbau (2) zur Übertragung der Drehbewegung angeordneten Drehsäule (3), wobei ein Energiezuführungskabel (1) zwischen jeweils einem fest gelagerten ersten Kabelsattel (5) des Unterbaues (4) und einem zweiten Kabelsattel (6) des drehbaren Oberbaues (2) zusätzlich in der Mitte des drehbaren Oberbaues (2) auf einem um eine senkrechte Achse drehbar gelagerten dritten Kabelsattel (7) aufgehängt ist und zwischen dem fest gelagerten ersten Kabelsattel (5) des Unterbaues (4) und dem dritten drehbar gelagerten Kabelsattel (7) sowie dem zweiten, am Oberbau (2) angeordneten Kabelsattel (6) frei hängende Schlaufen bildet, **dadurch gekennzeichnet, dass** der dritte Kabelsattel (7) um zwei senkrechte Achsen drehbar ist, wobei die erste Achse die Drehachse (3) des Tagebaugerätes und die zweite Achse eine in einem Abstand dazu parallel angeordnete Sattelaufnahme ist und beide Achsen durch einen nach außen gerichteten Arm (8) miteinander verbunden sind, der Arm (8) mit seinem einen Ende in einem Gleitlager um die Drehsäule (3) drehbar angeordnet ist und in seiner Höhe dadurch fixiert ist, dass die Drehsäule (3) mit einer waagerecht angeordneten Ringscheibe (11) versehen ist, auf der das Gleitlager mittels unterhalb angebrachter Rollen (10) um die Längsachse der Drehsäule (3) drehbeweglich und in der Höhe fixiert ist und der Hebel (8) an seinem freien Ende einen Lagerbolzen (16) des dritten Kabelsattels (7) in einer senkrechten Lagerbohrung aufnimmt und der zweite Kabelsattel (6) am Oberbau (2) in einem weiteren Gleitlager ebenfalls um eine senkrechte Achse drehbar angeordnet ist.

## Claims

1. An open-cast mining device having a fixed substructure (4) and a superstructure (2), which is rotatably supported thereon, comprising a rotary column (3), which is arranged between the substructure (4) and the superstructure (2), for transferring the rotary motion, wherein an energy supply cable (1) is additionally suspended in each case between a fixedly supported first cable saddle (5) of the substructure (4) and a second cable saddle (6) of the rotatable superstructure (2) in the center of the rotatable superstructure (2) on a third cable saddle (7), which is supported so as to be capable of being rotated about a vertical axis, and forms freely hanging loops between the fixedly supported first cable saddle (5) of the substructure (4) and the third rotatably supported cable saddle (7) as well as the second cable saddle (6), which is arranged on the superstructure (2),
**characterized in that**
the third cable saddle (7) can be rotated about two vertical axes, wherein the first axis is the axis of rotation (3) of the open-cast mining device, and the second axis is a saddle accommodation, which is arranged at a distance parallel thereto, and both axes are connected to one another by means of an arm (8), which is directed outwards, the arm (8) is arranged so as to be capable of being rotated about the rotary column (3) with its one end in a slide bearing, and is fixed in its height **in that** the rotary column (3) is provided with a horizontally arranged annular disk (11), on which the slide bearing can be moved rotationally about the longitudinal axis of the rotary column (3) by means of rollers (10), which are attached underneath, and is fixed in the height, and, on its free end, the lever (8) accommodates a bearing pin (16) of the third cable saddle (7) in a vertical bearing bore, and the second cable saddle (6) is arranged in a further slide bearing on the superstructure (2) so as to also be capable of rotating about a vertical axis.

## Revendications

1. Appareil d'exploitation à ciel ouvert comportant un bâti fixe (4) et une partie supérieure logée tournant dessus (2), avec une colonne rotative (3) disposée entre le bâti (4) et la partie supérieure (2) pour transmettre le mouvement de rotation, un câble d'alimentation en énergie (1) étant suspendu entre respectivement une première selle à câble (5) logée fixe du bâti (4) et une deuxième selle à câble (6) de la partie supérieure tournante (2) en plus dans le milieu de la partie supérieure tournante (2) sur une troisième selle à câble (7) logée pouvant tourner autour d'un axe perpendiculaire et formant des boucles pendant librement entre la première selle à câble (5) logée fixe du bâti (4) et la troisième selle à câble (7) logée pouvant tourner ainsi que la deuxième selle à câble (6) disposée sur la partie supérieure (2),
**caractérisé en ce que** la troisième selle à câble (7) peut tourner autour de deux axes perpendiculaires, le premier axe étant l'axe de rotation (3) de l'appareil d'exploitation à ciel ouvert et le deuxième axe étant un logement de selle disposé parallèlement à distance de celui-ci, et les deux axes étant reliés l'un à l'autre par un bras (8) orienté vers l'extérieur, le bras (8) étant disposé avec son extrémité dans un palier lisse, pouvant tourner autour de la colonne rotative (3) et fixé à sa hauteur par le fait que la colonne rotative (3) est dotée d'une couronne circulaire (11) disposée horizontalement sur laquelle le palier lisse est fixé mobile en rotation et à la hauteur autour de l'axe longitudinal de la colonne rotative (3) au moyen de galets (10) disposés en-dessous et le levier (8) recevant sur son extrémité libre un pivot (16) de la troisième selle à câble (7) dans un alésage d'appui perpendiculaire et la deuxième selle à câble (6) étant disposée sur la partie supérieure (2) dans un autre palier lisse, pouvant également tourner autour d'un axe perpendiculaire.
